# EUROPÄISCHE PATENTSCHRIFT

(11) **EP 1 961 717 B1**
(45) Veröffentlichungstag und Bekanntmachung des Hinweises auf die Patenterteilung: **10.11.2010**
(21) Anmeldenummer: 08101552.1
(22) Anmeldetag: 13.02.2008
(51) Int. Cl.: C04B 38/00, C04B 38/06, B01D 46/00, B01D 46/24, B01D 46/52, F01N 3/021, F01N 3/022, F01N 3/035

(54) **Dieselpartikelfilter mit einem keramischen Filterkörper**
Diesel particulate filter with a ceramic filter body
Filtre à particules diesel doté d'un corps de filtre céramique

(30) Priorität: 08.03.2007 DE 102007011569; 15.02.2007 DE 202007002429 U
(43) Veröffentlichungstag der Anmeldung: 27.08.2008
(73) Patentinhaber: MANN+HUMMEL GmbH, 71638 Ludwigsburg (DE)
(72) Erfinder: Seipler, Dr. Dieter, 71229, Leonberg (DE)

(56) Entgegenhaltungen:
- EP-A- 1 930 060
- WO-A-00/06287
- WO-A-2006/005668
- DE-A1-102004 058 285
- US-A- 5 252 111

## Beschreibung

### Technisches Gebiet

Die Erfindung betrifft ein Verfahren zur Herstellung eines Dieselpartikelfilters mit einem keramischen Filterkörper zur Filtrierung eines Abgasstromes eines Dieselmotors, wobei der Filterkörper flächige und poröse Filterabschnitte aufweist, die zur Durchströmung mit dem Abgasstrom quer zur Fläche der Filterabschnitte vorgesehen sind.

### Stand der Technik

Aus der WO 2006/005668 A1 ist ein Dieselpartikelfilter bekannt, umfassend einen keramischen Filterkörper aus einem Keramikmaterial, welcher Gaskanäle aufweist, die in einem Filterabschnitt mit flächigen und porösen Filterwänden versehen sind. Der Filterkörper ist zusammen mit dem Filterabschnitt und mindesten einem katalytischen Abschnitt einteilig aus mindestens einer keramisch imprägnierten Faserbahn, insbesondere Papier unter Bildung der Gaskanäle geformt und derart unter Temperatur durch sintern gebildet, dass Fasern des Fasermaterials freigebrannt sind, und dass das Keramikmaterial unter Bildung des Filterkörpers mit dem mindestens einen katalytischen Abschnitt und dem Filterabschnitt einteilig monolithisch zusammengesintert ist. Aus der DE 35 01 182 A1 ist ein Abgasfilter für Dieselmotoren bekannt. Die dort offenbarten keramischen Filterkörper weisen geschichtete, flächige und poröse Filterabschnitte auf, zwischen denen Gaskanäle gebildet sind. Die Gaskanäle sind wechselseitig verschlossen. Ein auf einer Seite in die dorthin offenen Gaskanäle einströmender Abgasstrom wird durch die Verschlussstopfen gezwungen, die porösen Filterabschnitte quer zu ihrer Fläche zu durchströmen. Die auf der gegenüberliegenden Seite befindlichen Abgaskanäle sind in Abströmrichtung offen und geben den filtrierten Abgasstrom frei.

Zur Herstellung der dort gezeigten keramischen Filterkörper werden keine Angaben gemacht. Geometrisch vergleichbare Körper, wie sie beispielsweise von Abgaskatalysatoren bekannt sind, werden durch Extrudieren hergestellt. Dies erfordert einen hohen Werkzeugaufwand für die Formgebung. Die Freiheitsgrade bei der Formgebung des Filterkörpers und insbesondere der Filterabschnitte sowie der Gaskanäle ist durch den Extrusionsprozess eingeschränkt. Eine strömungsoptimale Ausgestaltung des Dieselpartikelfilters ist schwierig.

Der Erfindung liegt die Aufgabe zugrunde, einen gattungsgemäßen Dieselpartikelfilter derart weiterzubilden, dass mit geringem Aufwand eine verbesserte Formgebung möglich ist.

Diese Aufgabe wird durch einen Dieselpartikelfilter mit den Merkmalen des Anspruchs 1 gelöst.

### Offenbarung der Erfindung

Es wird ein Verfahren zur Herstellung eines Dieselpartikelfilters mit einem keramischen Filterkörper aus einem Keramikmaterial vorgeschlagen, wobei der Filterkörper aus keramisch imprägnierten Faserbahnen, insbesondere aus Papier derart unter Temperatur durch Sintern gebildet wird, dass Fasern des Fasermaterials freigebrannt werden. Das Keramikmaterial wird unter Bildung des durchgängig zwischen seinen beiden Oberflächen porösen und gasdurchlässigen Filterabschnittes zusammengesintert. Die Faserbahnen sind zur Bildung des Filterkörpers in mehreren Schichten zu einem Stapel übereinander geschichtet und an versetzt zueinander angeordneten Kontaktflächen miteinander verbunden. Der Stapel ist zur Bildung der Gaskanäle zu einem Honigwabenquerschnitt expandiert. Die Verwendung von keramisch imprägnierten Faserbahnen erlaubt eine verbesserte Formgebung. Ebene keramisch imprägnierte Faserbahnen werden mit geringem Aufwand übereinander gestapelt und dabei streifenweise miteinander verleimt. Nach einer anschließenden Expansion in der Stapelrichtung entsteht auf einfache Weise ein Querschnitt mit honigwabenartig angeordneten Gaskanälen. Im imprägnierten, aber noch nicht gesinterten Zustand halten die Faserbahnen den vorstehend beschriebenen Filtergrundkörper in Form. Die Formstabilität in diesem Zustand reicht aus, auch komplexe Formgebungen mit dünnen Kanalquerschnitten und dünnen Wandstärken herzustellen. Beim Sinterprozess brennen die Fasern der Faserbahnen frei und erzeugen die gewünschte durchgängige Porosität der Filterabschnitte. Im Vergleich zu einem vorbekannten Extrusionsprozess lassen sich dünnere Wandstärken und nahezu beliebige Kanalquerschnitte bzw. Querschnittsverläufe herstellen. Bezogen auf den gleichen Anströmquerschnitt können sehr viel mehr Einzelkanäle zur Verfügung gestellt werden. Die Porengröße kann durch verschiedene Fasermaterialien bzw. keramische Imprägnierungen eingestellt werden. Bezogen auf die gewünschte Filtrierwirkung weist der erfindungsgemäß ausgeführte Dieselpartikelfilter einen deutlich geringeren Druckverlust bei der Durchströmung auf.

Bevorzugt werden benachbarte Gaskanäle wechselseitig auf einer Einströmseite und einer Ausströmseite verschlossen. Die auf der Ausströmseite verschlossenen Gaskanäle stellen eingangsseitige Gaskanäle dar, während durch die auf der Eingangsseite verschlossenen Gaskanäle ausgangsseitige Gaskanäle gebildet sind. Das wechselseitige Verschließen stellt beim Einströmen eine Aufstauwirkung her, die das einströmende Abgas dazu zwingt, durch die porösen Filterabschnitte hindurchzutreten. Die eingangsseitig verschlossenen, zum Ausgang hin offenen Gaskanäle stellen eine präzise definierte Abführung des filtrierten Abgases sicher.

Das Verschließen der Gaskanäle kann beispielsweise durch Eindrücken der gewellten Faserbahnen an geeigneter Stelle, gegebenenfalls unterstützt durch eine Verleimung, erfolgen. In bevorzugter Weiterbildung sind zum Verschließen der Gaskanäle Verschlussstopfen aus Keramikmaterial vorgesehen, wobei die Verschlussstopfen und die Faserbahn insbesondere zu einem monolithischen Körper zusammengesintert sind. Aus dem keramisch imprägnierten Fasermaterial lassen sich sehr kleine Kanalquerschnitte herstellen, in dessen Folge auch nur sehr kleine Verschlussstopfen erforderlich sind. Es entsteht ein materialeinheitlicher Filterkörper. Unter Verzicht auf zusätzliche Befestigungsmaterialien für die Verschlussstopfen kann der Filter unter Vermeidung von thermischen Rissbildungen hohen Temperaturbelastungen ausgesetzt werden.

Es kann zweckmäßig sein, eine Honigwabenform derart zu wählen, dass Gaskanäle mit über ihre Lauflänge konstanten Strömungsquerschnitten entstehen. Der Querschnitt der ein- und ausgangsseitigen Gaskanäle von der Einströmseite zur Ausströmseite hin ist demnach konstant. Abweichend von vorbekannten extrudierten Filterkörpern erlaubt die Verwendung von keramisch imprägnierten Faserbahnen jedoch insbesondere die Ausbildung von Gaskanälen mit veränderlichen Querschnitten. Vorteilhaft verengt sich der Querschnitt der eingangsseitigen Gaskanäle von der Einströmseite zur Ausströmseite hin. Zweckmäßig erweitert sich der Querschnitt der ausgangsseitigen Gaskanäle von der Einströmseite zur Ausströmseite hin. Insbesondere bei einem linear veränderten Querschnittsverlauf stellen sich entlang der Lauflänge der Gaskanäle eine zumindest näherungsweise konstante Strömungsgeschwindigkeit sowie ein zumindest näherungsweise konstanter Druckabfall an den Filterabschnitten ein. Die Filtrierbelastung der einzelnen Filterabschnitte ist über ihre gesamte Fläche zumindest näherungsweise konstant. Der Durchströmungswiderstand ist verringert. Wartungsintervalle bzw. Intervalle zwischen Freibrennzyklen sind verlängert.

In einer bevorzugen Ausführungsform weisen die Gaskanäle in der Stapelrichtung eine konstante Höhe auf. Dies ermöglicht es, aus dem geschichteten und wechselseitig streifenweise verbundenen Halbzeug durch Expansion in der Stapelrichtung einen Filterrohling in Blockform zu ziehen, wobei die Blockhöhe in Durchströmungsrichtung konstant ist. Auf der Einströmseite und auf der Ausströmseite stehen jeweils gleiche Gesamtquerschnitte zur Verfügung, was zur Minimierung des Durchströmungswiderstandes und des damit verbundenen Druckabfalls beiträgt.

Aus der Honigwabenform ergibt sich ein sechseckiger Kanalquerschnitt. Hieraus und aus der abwechselnden, benachbarten Anordnung von ein- und ausgangsseitige Gaskanäle direkt nebeneinander liegen. Vielmehr liegen auch eingangsseitige Gaskanäle und ausgangsseitige Gaskanäle jeweils paarweise nebeneinander. Insbesondere im Grenzbereich zwischen zwei gleichartigen benachbarten Gaskanälen kann es zweckmäßig sein, gasundurchlässige Bereiche vorzusehen, um einen Gasaustausch zwischen diesen Kanälen zu vermeiden.

In zweckmäßiger Weiterbildung weist mindestens eine Faserbahn nicht imprägnierte Abschnitte zur Bildung von Öffnungen im Filterkörper auf. Die nicht imprägnierten Abschnitte der Faserbahn verbrennen beim Sinterprozess. Durch das Fehlen einer keramischen Imprägnierung verbleiben an dieser Stelle Öffnungen, die beispielsweise einen ungehinderten Gasaustausch zwischen zwei benachbarten Gaskanälen zulassen. Dies ermöglicht es, z. B. im Ein- oder Ausströmbereich vor bzw. nach den angrenzenden Verschlussstopfen den Strömungsquerschnitt sämtlicher Gaskanäle beispielsweise für eine katalytische Abgasbehandlung zu nutzen.

### Kurze Beschreibung der Zeichnungen

Ausführungsbeispiele der Erfindung sind nachfolgend anhand der Zeichnung näher beschrieben. Es zeigen:
- Figur 1: in schematischer Perspektivdarstellung einen nach dem erfindungsgemäßen Verfahren hergestellten keramischen Filterkörper aus keramisch imprägnierten, zu einer Honigwabenstruktur expandierten und gesinterten Faserbahnen für den Einsatz in einem Dieselpartikelfilter,
- Figur 2: eine schematische Darstellung eines Stapels aus keramisch imprägnierten Faserbahnen vor der Expansion zu einer Honigwabenstruktur,
- Figur 3: eine Variante der Anordnung nach Fig. 1 mit im Querschnitt linear veränderlichen Gaskanälen,
- Figur 4: eine schematische Längsschnittdarstellung zweier benachbarter Gaskanäle mit einer zwischenliegenden Öffnung für einen ungehinderten Gasaustausch,
- Figur 5: eine Schemadarstellung einer Walzanlage zur Imprägnierung von Faserbahnen mit Keramikmaterial,
- Figur 6: eine Schemadarstellung einer Rakelanlage zur Imprägnierung von Faserbahnen mit Keramikmaterial,
- Figur 7: eine schematische Perspektivdarstellung einer mit der Anordnung nach Figur 4 oder Figur 5 teilweise imprägnierten, mit Ausschnitten versehenen Faserbahn.

### Ausführungsform(en) der Erfindung

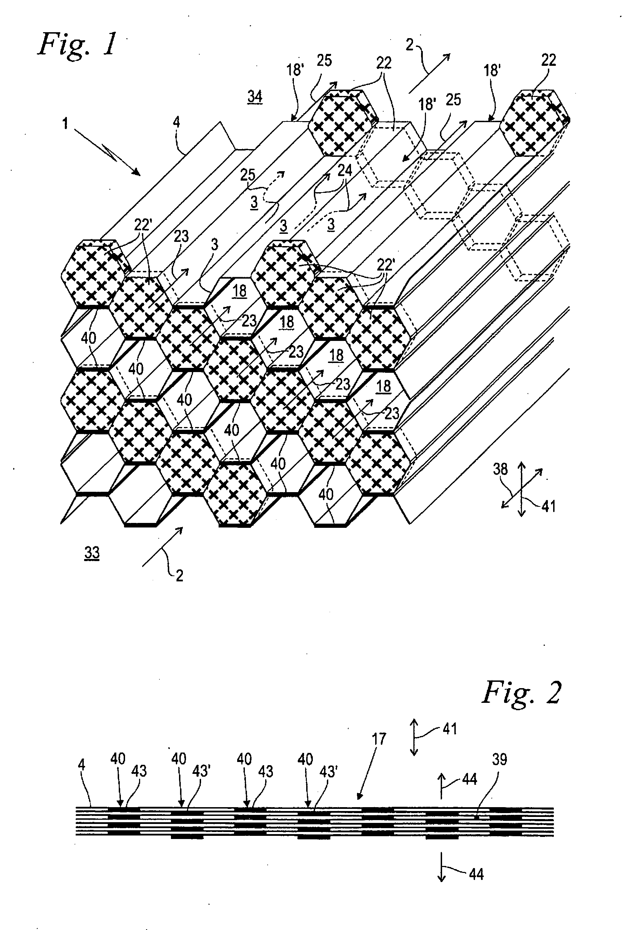

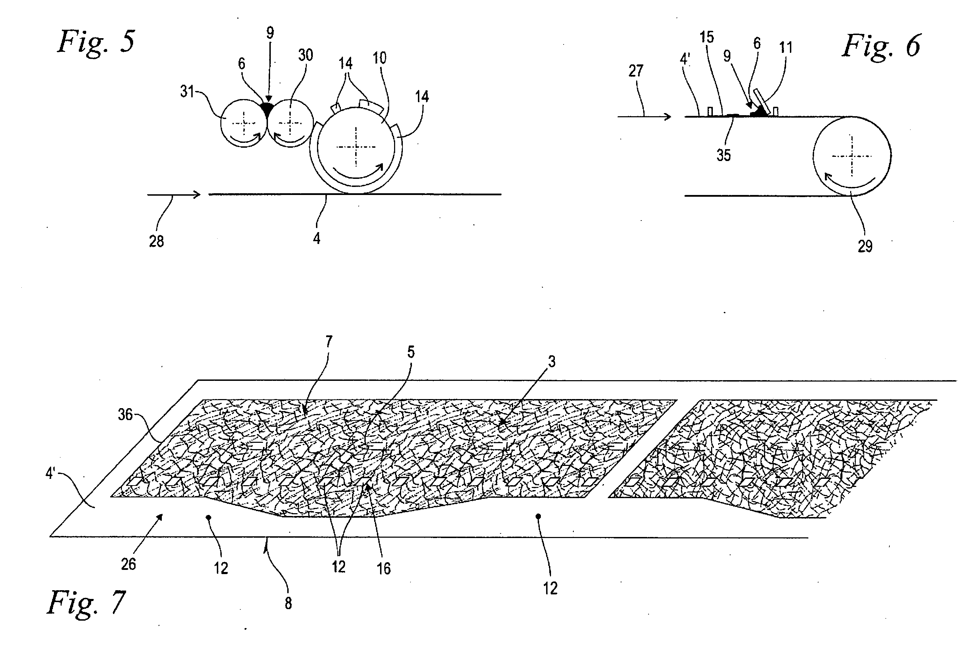

Figur 1 zeigt in schematischer, teilweise geschnittener Perspektivdarstellung einen erfindungsgemäß hergestellten keramischen Filterkörper 1. Der Filterkörper 1 ist Teil eines nicht näher dargestellten Dieselpartikelfilters und zur Filtrierung eines Abgasstromes 2 eines Dieselmotors vorgesehen. Der Filterkörper 1 ist durch weiter unten im Zusammenhang mit den Figuren 5 bis 7 näher beschriebene, keramisch imprägnierte Faserbahnen 4 gebildet. Die Faserbahnen 4 sind entsprechend der Darstellung nach Figur 2 zu einem Halbzeug 17 zusammengefügt, welches zu dem blockförmigen Filterkörper 1 mit einer Honigwabenstruktur expandiert ist.

Nach Figur 2 wird eine Vielzahl von keramisch imprägnierten Faserbahnen 4 in einer Stapelrichtung 41 zu einem Stapel 39 geschichtet. Dazu können einzelne zugeschnittene Stücke der Faserbahn 4 nach Figur 7 gewählt werden. Es kann auch zweckmäßig sein, eine durchgehende Faserbahn 4 zu falten und zickzackförmig zu einem Stapel 39 zu legen. Die geschichteten Faserbahnen 4 werden an versetzt zueinander angeordneten Kontaktflächen 40 miteinander verbunden. Hierzu sind Leimstreifen 43, 43' aus keramischem Leim vorgesehen. Die obersten beiden Faserbahnen 4 sind mit Leimstreifen 43 miteinander verbunden, wobei die Leimstreifen schmaler sind als ein jeweiliger Abstand zwischen ihnen. Im gezeigten Ausführungsbeispiel beträgt der Abstand zwischen zwei Leimstreifen 43 etwa das Dreifache der Breite eines Leimstreifens 43. Die direkt darunter liegende Faserbahn 4 ist mit der darüberliegenden Faserbahn 4 mit Leimstreifen 43' verbunden. Diese Leimstreifen 43' liegen gegenüber den darüber und darunter angeordneten Leimstreifen 43 derart versetzt, dass sie genau mittig zwischen den Leimstreifen 43 angeordnet sind. In Breite und Abstand zueinander stimmen die Leimstreifen 43' mit den Leimstreifen 43 überein. Die vorstehend beschriebene wechselseitige Anordnung der Leimstreifen 43, 43' setzt sich durch den gesamten Stapel 39 fort. Nach dem Verleimen der Faserbahnen 4 wird der daraus gebildete Stapel 39 in der Stapelrichtung 41 entsprechend Pfeilen 44 expandiert, in dessen Folge der Rohling des Filterkörpers 1 nach Figur 1 entsteht. Die Breite der Leimstreifen 43, 43' und ihre Abstände zueinander sind derart gewählt, dass beim Expandieren eine Honigwabenstruktur mit Gaskanälen 18, 18' entsteht, wobei die Gaskanäle 18, 18' Querschnitte in Form eines gleichseitigen Sechseckes aufweisen. Die Expansion ist so weit durchgeführt, dass die sechseckigen Querschnitte auch näherungsweise gleichwinklig sind.

Unter erneutem Bezug auf Figur 1 ist eine Durchströmung des Filterkörpers 1 vom Abgasstrom 2 in einer Längsrichtung 38 des Filterkörpers 1 von einer Einströmseite 33 zu einer Ausströmseite 34 vorgesehen. Durch die Expansion der Faserbahnen 4 (Figur 2) entsteht eine Vielzahl von zumindest näherungsweise achsparallel verlaufenden Gaskanälen 18, 18' mit entlang der Längsrichtung 38 konstanter, in der Stapelrichtung 41 gemessener Höhe. In der Querschnittsebene des Filterkörpers 1 diagonal zur Stapelrichtung 41 sind abwechselnd je ein Gaskanal 18 und ein Gaskanal 18' vorgesehen. Die Gaskanäle 18 sind zur Einströmseite 33 hin offen und in gegenüberliegender Richtung zur Ausströmseite 34 hin mittels Verschlussstopfen 22 verschlossen. Bezogen auf die vorgenannte diagonale Richtung liegt zwischen zwei Gaskanälen 18 je ein Gaskanal 18', der zur Einströmseite 33 hin mittels eines Verschlussstopfens 22' verschlossen und zur Ausströmseite 34 hin offen ist. Im Betrieb strömt der Abgasstrom 2 entsprechend einem Pfeil 23 achsparallel in die zur Einströmseite 33 hin offenen Gaskanäle 18 ein. Seitenwände der durch den expandierten Stapel 39 (Figur 2) hergestellten keramischen Struktur bilden flächige und poröse Filterabschnitte 3. Der an den Verschlussstopfen 22 aufgestaute Abgasstrom 2 wird in Diagonalrichtung entsprechend Pfeilen 24 abgelenkt und durchströmt die porösen keramischen Filterabschnitte 3 quer zu ihrer Fläche. Entsprechend den Pfeilen 24 tritt der Abgasstrom 2 durch die Filterabschnitte 3 hindurch in die zur Ausströmseite 34 hin offenen Kanäle 18' ein und strömt aus ihnen entsprechend Pfeilen 25 aus. Beim Durchtritt durch die porösen Filterabschnitte 3 wird der Abgasstrom 2 von mitgeführten Rußpartikeln oder dgl. gereinigt.

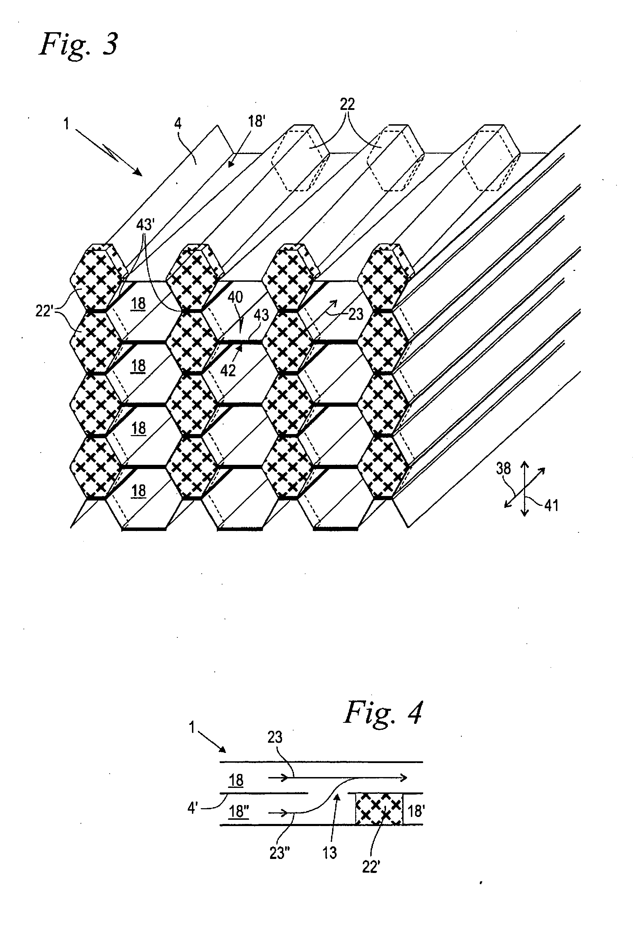

Für bestimmte Anwendungsfälle kann es zweckmäßig sein, in den durch die Faserbahnen 4 gebildeten Filterbereich Öffnungen 13 einzubringen, deren Herstellung weiter unten beschrieben wird. Der schematischen Längsschnittdarstellung nach Fig. 4 ist hierzu zu entnehmen, dass eine solche Öffnung 13 beispielsweise stromauf eines Verschlussstopfens 22' angeordnet ist. Der eingangsseitige Gaskanal 18 ist durchgängig am Verschlussstopfen 22' vorbeigeführt. Die benachbart angrenzende Kanalstruktur ist durch den Verschlussstopfen 22' in den ausgangsseitigen Gaskanal 18' und einen eingangsseitigen Kanalabschnitt 18" aufgeteilt. Der Abgasstrom 2 (Fig. 1) kann stromauf des Verschlussstopfens 22' unter Ausnutzung des Strömungsquerschnittes der Gaskanäle 18 und der Kanalabschnitte 18" in den Filterkörper 1 einströmen. In diesem Bereich kann beispielsweise eine katalytische Beschichtung unter Ausnutzung des gesamten Strömungsquerschnitts vorgesehen sein. Stromauf des Verschlussstopfens 22' wird das Abgas entsprechend einem Pfeil 23" durch die Öffnung 13 in den eingangsseitigen Gaskanal 18 umgeleitet. Dort vereinigt er sich mit dem Gasstrom nach Pfeil 23, woraus sich die vorstehend beschriebene Filtrierfunktion ergibt. Analog dazu können auch Öffnungen 13 stromab der Verschlussstopfen 22 (Fig. 1) vorgesehen sein.

Eine weitere vorteilhafte Möglichkeit besteht darin, neben der in Figur 1 gezeigten Durchströmung entlang der Pfeile 24 auch eine Durchströmung der Kontaktflächen 40 zuzulassen. In diesem Falle sind auch die in Figur 2 gezeigten Leimstreifen 43 porös ausgeführt und bilden durchströmte Filterabschnitte.

In Fig. 3 ist ein weiteres Ausführungsbeispiel des Filterkörpers 1 nach Figur 1 gezeigt. Abweichend von der Darstellung nach Figur 1, in der die Gaskanäle 18, 18' entlang der Längsrichtung 38 einen konstanten Querschnitt aufweisen, verengen sich die Querschnitte der eingangsseitigen Gaskanäle 18 von der Einströmseite 33 zur Ausströmseite 34 hin. Umgekehrt erweitern sich die Querschnitte der ausgangsseitigen Gaskanäle 18' von der Einströmseite 33 zur Ausströmseite 34 hin, wobei jedoch bei sämtlichen Gaskanälen 18, 18' die Kanalhöhe konstant bleibt. Dies wird erreicht durch eine Trapezform der Kontaktflächen 40 mit an der Einströmseite 33 breiten und an der Ausströmseite 34 schmalen Leimstreifen 43. Umgekehrt sind die Leimstreifen 43' an der Einströmseite 33 schmal und an der Ausströmseite 34 breit. Im gezeigten Ausführungsbeispiel verändert sich die Breite der Leimstreifen 43, 43' von der Einströmseite 33 zur Ausströmseite 34 hin linear, wobei die Leimstreifen 43' um das gleiche Maß breiter werden, wie die Leimstreifen 43 schmaler werden. Infolge der konstanten Kanalhöhe ist auch der Querschnittsverlauf etwa linear. Es kann aber auch ein abweichender, nichtlinearer Verlauf zweckmäßig sein.

Der entlang von Pfeilen 23 in die Gaskanäle 18 eintretende Abgasstrom 2 (Fig. 1) dringt entlang der gesamten Lauflänge der Gaskanäle 18, 18' durch die Filterabschnitte 3 entsprechend Pfeilen 24 hindurch. Dadurch verringert sich der eingangsseitige Volumenstrom 23 im Gaskanal 18 entlang dessen Lauflänge, während sich der ausgangsseitige Volumenstrom 25 im Gaskanal 18' entlang dessen Lauflänge vergrößert. Der vorstehend im Zusammenhang mit Figur 3 beschriebene Querschnittsverlauf der Gaskanäle 18, 18' führt dazu, dass die Strömungsgeschwindigkeit innerhalb der Gaskanäle 18, 18' sowie die über die Filterabschnitte 3 gemessene Druckdifferenz zwischen den Gaskanälen 18, 18' entlang deren Lauflänge zumindest näherungsweise konstant sind. Die Filtrierbelastung der Filterabschnitte 3 ist dadurch entlang der Lauflänge der Gaskanäle 18, 18' zumindest näherungsweise konstant.

Weitere Unterschiede der Anordnung nach Figur 3 zum Ausführungsbeispiel nach Figur 1 bestehen noch darin, dass die Verschlussstopfen 22, 22' in der Stapelrichtung 41 übereinander angeordnet sind, wobei seitlich nebeneinander abwechselnd Gaskanäle 18, 18' angeordnet sind. Außerdem sind die Faserbahnen 4 beispielhaft im Bereich der Kontaktflächen 40 gasundurchlässig. Dies kann durch eine geeignete partielle keramische Imprägnierung oder durch eine geeignete Ausführung der Leimstreifen 43, 43' erzielt werden. In den übrigen Merkmalen und Bezugszeichen stimmt das Ausführungsbeispiel nach Figur 3 mit demjenigen nach Figur 1 überein.

Figur 5 zeigt eine schematische Darstellung einer Vorrichtung zur keramischen Imprägnierung der erfindungsgemäßen Faserbahn 4. Zwei Beschickungswalzen 30, 31 der Vorrichtung sind achsparallel zueinander angeordnet und liegen bündig nebeneinander. Sie drehen sich gegenläufig, wobei in einem keilförmigen Zwischenraum oberhalb ihrer Berührlinie ein Keramikmaterial 6 bevorratet ist. Das Keramikmaterial 6 kann ein trockenes Pulver aus feingemahlener Keramik sein, welches für eine Trockenimprägnierung der Faserbahn 4 vorgesehen ist. Im gezeigten Ausführungsbeispiel ist mit dem Keramikmaterial 6 eine wässrige Emulsion 9 hergestellt. Anstelle von Wasser kann auch eine andere geeignete Flüssigkeit oder ein Flüssigkeitsgemisch zweckmäßig sein. Eine weitere Walze 10 ist achsparallel zur Beschickungswalze 30 angeordnet und berührt diese entlang einer Berührlinie. Die Beschickungswalze 30 trägt infolge ihrer durch einen Pfeil angegebenen Drehung die keramische Emulsion 9 zur Walze 10 und rollt die keramische Emulsion 9 auf die Oberfläche der Walze 10 auf. Mittels der Walze 10 wird das Keramikmaterial 6 in das Material der unterhalb in Richtung eines Pfeils 28 entlang geführten Faserbahn 4 eingewalzt. Hierzu liegt die Walze 10 mit Anpressdruck auf der Faserbahn 4 auf. Es wird ein Tränken der Faserbahn 4 mit der Emulsion 9 durchgeführt. Die flächige, durchlässige Faserbahn 4 nimmt dabei das feingemahlene Keramikmaterial 6 innerhalb ihres gesamten Querschnitts auf.

Eine weitere Möglichkeit für eine keramische Imprägnierung der Faserbahn 4 ist in Fig. 6 gezeigt. Die rohe Faserbahn 4 wird in Richtung eines Pfeils 27 der gezeigten Vorrichtung zugeführt und läuft um eine Andruckwalze 29 um. Bezogen auf die durch den Pfeil 27 angegebene Bewegungsrichtung liegt vor der Andruckwalze 29 ein Sieb 15 auf der Faserbahn 4 auf. Oberhalb des Siebes 15 ist auf diesem ebenfalls eine wässrige Emulsion 9 mit dem Keramikmaterial 6 bevorratet. Die Emulsion 9 wird mittels einer Rakel 11 unter Druck durch das Sieb hindurch in das Material der Faserbahn 4 hineingestrichen, wodurch eine Tränkung der Faserbahn 4 mit der Emulsion 9 erfolgt. Alternativ kann auch eine Trockenimprägnierung der Faserbahn 4 mit dem Keramikmaterial 6 erfolgen.

Aus den nach Figur 5 oder Figur 6 hergestellten Faserbahnen 4 wird das Halbzeug 17 entsprechend der Darstellung nach Figur 2 gebildet und expandiert. Des Weiteren wird zur Bildung der Verschlussstopfen 22, 22' eine keramische Masse an geeigneter Stelle in die Gaskanäle 18, 18' eingebracht. Der auf diese Weise gebildete Filterrohling wird nach einem Trocknungsprozess in einem Sinterofen unter Einwirkung von Temperatur gesintert, wobei das Keramikmaterial 6 zusammen mit der keramischen Masse der Verschlussstopfen 22, 22' zu einem monolithischen Keramikkörper zusammengesintert wird. Bei der hohen Sintertemperatur verbrennt das Material der Faserbahnen 4, 4', wodurch das Keramikmaterial 6 porös wird. Die Porosität ist derart ausgebildet, dass der Abgasstrom 2 (Figur 1) quer zur Fläche der keramischen Filterabschnitte 3 durch diese hindurchströmen kann.

Figur 7 zeigt in perspektivischer Schemadarstellung die endlose Faserbahn 4. Die Faserbahn 4 wird aus Fasern 5 gebildet. Hierzu kann ein Filz, ein textiles Gewebe oder Gewirke vorgesehen sein. Bevorzugt ist ein offenes, durchlässiges Filterpapier gewählt. Die Faserbahn 4 ist flächig und durchlässig in dem Sinne, dass das feingemahlene Keramikmaterial 6 (Figuren 5, 6) zwischen Fasern 5 der Faserbahn 4 eindringen kann. Die Durchlässigkeit der Faserbahn 4 und der Imprägnierungsprozess nach den Figuren 5 oder 6 sind derart aufeinander abgestimmt, dass ein Teil der Fasern 5 nach dem Imprägnieren mit dem Keramikmaterial 6 (Figuren 5, 6) an beiden gegenüberliegenden Oberflächen 7, 8 der Faserbahn 4 frei liegen. Dies führt beim Freibrennen der Fasern 5 während des Sinterprozesses dazu, dass der gesinterte keramische Filterabschnitt 3 durchgängig von einer Oberfläche 7 bis zur gegenüberliegenden Oberfläche 8 porös und damit quer zur Fläche des Filterabschnittes 3 gasdurchlässig für den Abgasstrom 2 (Figur 1) ist.

Für bestimmte Anwendungsfälle kann es zweckmäßig sein, zumindest abschnittsweise eine Gasdichtigkeit herbeizuführen. Beispielsweise kann der Filterkörper 1 (Figur 3) im Bereich der Kontaktflächen 40 gasundurchlässig sein, während eine Gasdurchlässigkeit nur in den übrigen Bereichen gewünscht wird. In diesem Falle erfolgt neben der tränkenden Imprägnierung der Faserbahn 4 auch abschnittsweise eine geschlossene Oberflächenbeschichtung mit dem Keramikmaterial 6 (Figur 5) an zumindest einer der beiden Oberflächen 7, 8, ohne dass dort die Fasern 5 freiliegen. In diesem Falle entsteht beim Sintern ein geschlossener Keramikkörper, der im Bereich der Oberfläche 7, 8 nicht porös und damit nicht gasdurchlässig ist.

Es kann zweckmäßig sein, die Faserbahn 4 als unbeschnittenes Endlosmaterial vollflächig mit dem Keramikmaterial 6 (Figuren 5, 6) zu imprägnieren. Im gezeigten Ausführungsbeispiel nach Figur 7 sind nicht imprägnierte Abschnitte 12 vorgesehen. Ein Teil der nicht imprägnierten Abschnitte 12 wird zur späteren Bildung der Öffnungen 13 (Figur 4) von der Imprägnierung ausgenommen. Ein weiterer nicht imprägnierter Abschnitt 12 ist durch einen Randbereich 26 gebildet, der ein begrenztes Flächengebilde 36 umgibt. Das begrenzte Flächengebilde 36 weist die Kontur auf, die zum Stapeln des Halbzeuges 17 nach Figur 2 erforderlich ist. Das Flächengebilde 36 wird durch Beschneiden der Faserbahn 4 insbesondere durch Ausstanzen der Umfangskontur des Flächengebildes 36 sowie durch Ausstanzen der Ausschnitte 16 hergestellt. Es kann auch zweckmäßig sein, auf ein Ausstanzen der Ausschnitte 16 zu verzichten und lediglich die zugehörigen Abschnitte 12 von der Imprägnierung mit dem Keramikmaterial 6 (Figur 2) auszunehmen. Dies erfolgt in weiter unten näher beschriebener Weise. Beim Sinterprozess verbrennen dann die nicht imprägnierten Abschnitte 12 vollständig und hinterlassen die Öffnungen 13 (Figur 4).

Der Darstellung nach Figur 5 ist zu entnehmen, dass die Walze 10 eine Oberflächenstrukturierung 14 aufweist. Diese entspricht in ihrer Form der Kontur des Flächengebildes 36 nach Figur 7. Die keramische Emulsion 9 wird nur durch die erhabenen Flächen der Oberflächenstrukturierung 14 in die Faserbahn 4 eingewalzt. In zwischenliegenden, in radialer Richtung zurückversetzten Bereichen der Oberflächenstrukturierung 14 kann keine Imprägnierung mit dem Keramikmaterial 6 erfolgen, so dass die Faserbahn 4 nach Figur 7 nur teilweise und unter Bildung der nicht imprägnierten Abschnitte 12 mit dem Keramikmaterial 6 imprägniert wird.

Eine alternative Form der Herstellung von nicht imprägnierten Abschnitten 12 in der Faserbahn 4 ergibt sich aus der Darstellung nach Figur 6 im Bereich des Siebes 15. Das Sieb 15 ist vergleichbar zum Siebdruckverfahren mit schematisch angedeuteten Abdeckungen 35 versehen. Die Abdeckungen 35 entsprechen in ihrer Kontur der Form der nicht imprägnierten Abschnitte 12 nach Figur 7. Beim Aufstreichen der keramischen Emulsion 9 mittels der Rakel 11 verhindern die Abdeckungen 35 partiell eine Tränkung und bilden die nicht imprägnierten Abschnitte 12.

In den gezeigten Ausführungsbeispielen erfolgt zunächst eine Imprägnierung der Faserbahnen 4 mit dem Keramikmaterial 6 (Figuren 5, 6) und anschließend die Zusammenfügung zum Halbzeug 17 (Figur 2) und Expandieren zum Rohling des Filterkörpers 1 nach Figur 1 oder Figur 3. Dieser Rohling wird anschließend getrocknet und schließlich gesintert. Es kann auch zweckmäßig sein, den Rohling des Filterkörpers 1 zunächst aus nicht imprägnierten Faserbahnen 4 zu formen und anschließend beispielsweise in einem Tauchbad mit dem Keramikmaterial 6 (Figuren 5, 6) zu tränken. Daran schließen sich dann ein Trocknungsprozess und schließlich der Sinterprozess an.

## Patentansprüche

1. Verfahren zur Herstellung eines Dieselpartikelfilters, umfassend einen keramischen Filterkörper (1) aus einem Keramikmaterial (6) zur Filtrierung eines Abgasstromes (2) eines Dieselmotors, wobei der Filterkörper (1) Gaskanäle (18, 18') mit flächigen und porösen Filterabschnitten (3) aufweist, die zur Durchströmung mit dem Abgasstrom (2) quer zur Fläche der Filterabschnitte (3) vorgesehen sind, wobei die Faserbahnen (4) zur Bildung des Filterkörpers (1) in mehreren Schichten zu einem Stapel (39) übereinander geschichtet und an versetzt zueinander angeordneten Kontaktflächen (40) miteinander verbunden werden, und wobei der Stapel (39) zur Bildung der Gaskanäle (18, 18') zu einem Honigwabenquerschnitt expandiert, wobei der Filterkörper (1) aus keramisch imprägnierten Faserbahnen (4), insbesondere Papier, unter Temperatur durch Sintern gebildet wird, derart, dass Fasern (5) des Fasermaterials freigebrannt werden, und dass das Keramikmaterial (6) unter Bildung des durchgängig zwischen seinen beiden Oberflächen (7, 8) porösen und gasdurchlässigen Filterabschnittes (3) zusammengesintert wird.

2. Verfahren nach Anspruch 1, **dadurch gekennzeichnet, dass** benachbarte Gaskanäle (18, 18') wechselseitig auf einer Einströmseite (33) und auf einer Ausströmseite (34) verschlossen werden.

3. Verfahren nach Anspruch 2, **dadurch gekennzeichnet, dass** zum Verschießen der Gaskanäle (18, 18') Verschlussstopfen (22, 22') aus Keramikmaterial vorgesehen sind.

4. Verfahren nach Anspruch 3, **dadurch gekennzeichnet, dass** die Verschlussstopfen (22, 22') und die Faserbahn (4) zu einem monolithischen Filterkörper (1) zusammengesintert werden.

5. Verfahren nach einem der Ansprüche 1 bis 4, **dadurch gekennzeichnet, dass** sich der Querschnitt der eingangsseitigen Gaskanäle (18) von der Einströmseite (33) zur Ausströmseite (34) hin verengt.

6. Verfahren nach einem der Ansprüche 1 bis 5, **dadurch gekennzeichnet, dass** sich der Querschnitt der ausgangsseitigen Gaskanäle (18') von der Einströmseite (33) zur Ausströmseite (34) hin erweitert.

7. Verfahren nach einem der Ansprüche 1 bis 4, **dadurch gekennzeichnet, dass** der Querschnitt der ein- und ausgangsseitigen Gaskanäle (18, 18') von der Einströmseite (33) zur Ausströmseite (34) hin konstant ist.

8. Verfahren nach einem der Ansprüche 1 bis 7, **dadurch gekennzeichnet, dass** die Gaskanäle (18, 18') bezogen auf eine Stapelrichtung (41) eine konstante Höhe aufweisen.

9. Verfahren nach einem der Ansprüche 1 bis 8, **dadurch gekennzeichnet, dass** gasundurchlässige Bereiche (42) der Faserbahnen (4) vorgesehen sind.

10. Verfahren nach einem der Ansprüche 1 bis 10, **dadurch gekennzeichnet, dass** mindestens eine Faserbahn (4, 4') nicht imprägnierte Abschnitte (12) zur Bildung von Öffnungen (13) im Filterkörper (1) aufweist.

## Claims

1. Method for manufacturing a Diesel particulate filter, comprising a ceramic filter body (1) made of a ceramic material (6) for filtering an exhaust-gas flow (2) of a diesel engine, the filter body (1) featuring gas channels (18, 18') with plane and porous filter sections (3), which are provided transversally to the surface of the filter sections (3) for being flowed through by the exhaust-gas flow (2), the fiber webs (4) being laid one on top of the other to a stack (39) for forming the filter body (1) and being connected with each other at contact areas (40) arranged offset in relation to each other, and the stack (39) being expanded to a honeycomb cross-section for forming the gas channels (18, 18'), the filter body (1) made of ceramically impregnated fiber webs (4), in particular paper, being sintered under temperature in such a way that fibers (5) of the fiber material are burned free and that the ceramic material (6) is sintered by forming the end-to-end porous and gas-permeable filter section (3) between its two surfaces (7, 8).

2. Method according to claim 1, **characterized in that** adjacent gas channels (18, 18') are closed alternately at an inflow side (33) and at an outflow side (34).

3. Method according to claim 2, **characterized in that** for closing the gas channels (18, 18') plugs (22, 22') made of ceramic material are provided.

4. Method according to claim 3, **characterized in that** the plugs (22, 22') and the fiber web (4) are sintered to form a monolithic filter body (1).

5. Method according to one of the claims 1 to 4, **characterized in that** the cross-section of the gas channels (18) located at the entry side narrows from the inflow side (33) towards the outflow side (34).

6. Method according to one of the claims 1 to 5, **characterized in that** the cross-section of the gas channels (18') located at the exit side enlarges from the inflow side (33) towards the outflow side (34).

7. Method according to one of the claims 1 to 4, **characterized in that** the cross-section of the gas channels (18, 18') located at the entry and exit side is constant from the inflow side (33) towards the outflow side (34).

8. Method according to one of the claims 1 to 7, **characterized in that** the gas channels (18, 18') feature a constant height in relation to a stack direction (41).

9. Method according to one of the claims 1 to 8, **characterized in that** gas-impermeable areas (42) of the fiber webs (4) are provided.

10. Method according to one of the claims 1 to 10, **characterized in that** at least one fiber web (4, 4') features non-impregnated sections (12)

## Revendications

1. Procédé de fabrication d'un filtre à particules diesel comprenant un corps de filtre céramique (1) fabriqué dans un matériau céramique (6) destiné au filtrage d'un flux de gaz d'échappement (2) d'un moteur diesel, le corps de filtre (1) présentant des canaux de gaz (18, 18') avec des sections de filtre (3) planes et poreuses qui sont destinées à être traversées du flux de gaz d'échappement (2) en travers de la surface des sections de filtre, les bandes fibreuses (4) formant le corps du filtre (1) étant superposées en plusieurs couches pour former une pile (39) et étant reliées les unes aux autres à des surfaces de contact (40) décalées les unes par rapport aux autres, et la pile (39) formant les canaux de gaz (18, 18') s'élargissant en forme de section à nid d'abeilles, le corps de filtre (1) étant formé par frittage, sous l'effet de chaleur, à partir de bandes fibreuses (4) imprégnées de céramique, notamment de papier, de sorte que des fibres (5) du matériau fibreux soient brûlées et que le matériau céramique (6) soit assemblé par frittage par formation de la section de filtre (3) totalement poreuse et perméable au gaz entre ses deux surfaces (7, 8).

2. Procédé selon la revendication 1, **caractérisé en ce que** des canaux de gaz voisins (18, 18') sont obturés en alternance d'un côté entrée (33) et d'un côté sortie (34).

3. Procédé selon la revendication 2, **caractérisé en ce que** des bouchons de fermeture (22, 22') faits d'un matériau céramique sont prévus pour obturer les canaux de gaz (18, 18').

4. Procédé selon la revendication 3, **caractérisé en ce que** les bouchons de fermeture (22, 22') et la bande fibreuse (4) sont assemblés par frittage pour former un corps de filtre (1) monolithique.

5. Procédé selon l'une des revendications 1 à 4, **caractérisé en ce que** la section des canaux de gaz côté entrée (18) rétrécit du coté entrée (33) vers le côté sortie (34).

6. Procédé selon l'une des revendications 1 à 5, **caractérisé en ce que** la section des canaux de gaz côté sortie (18') s'élargit du coté entrée (33) vers le côté sortie (34).

7. Procédé selon l'une des revendications 1 à 4, **caractérisé en ce que** la section des canaux de gaz côté entrée et côté sortie (18, 18') reste constante du coté entrée (33) vers le côté sortie (34).

8. Procédé selon l'une des revendications 1 à 7, **caractérisé en ce que** la section des canaux de gaz (18, 18') ont une hauteur constante par rapport au sens d'empilage (41).

9. Procédé selon l'une des revendications 1 à 8, **caractérisé en ce que** des zones imperméables au gaz (42) des bandes fibreuses (4) sont prévues.

10. Procédé selon l'une des revendications 1 à 10, **caractérisé en ce qu'**au moins une bande fibreuse (4, 4') présente des sections non imprégnées (12) pour former des ouvertures (13) dans le corps de filtre (1).
